# EUROPEAN PATENT APPLICATION

(11) **EP 4 435 662 A1**
(43) Date of publication of application: **25.09.2024**
(21) Application number: 24160504.7
(22) Date of filing: 29.02.2024
(51) Int. Cl.: G06F 30/398, G06F 30/392, G06F 115/12, G06F 119/18

(54) **METHOD AND APPARATUS FOR VERIFYING PLACEMENT OF CHIP COMPONENT ON PRINTED CIRCUIT BOARD**

(30) Priority: 21.03.2023 KR 20230036703
(71) Applicant: Samsung SDI Co., Ltd., Yongin-si, Gyeonggi-do 17084 (KR)
(72) Inventor: Lee, Eunsik, 17084 Yongin-si, Gyeonggi-do (KR)
(74) Representative: Gulde & Partner

(57) **Abstract**

Provided is a method of verifying component placement on a printed circuit board, PCB, the method including obtaining a preset separation distance criterion for an arrangement of chip components (10) designed to be mounted on the PCB, and based on the preset separation distance criterion for the arrangement of the chip components, checking whether a separation distance (5) between the chip components (10) satisfies the preset separation distance criterion, wherein the checking of whether the preset separation distance criterion is satisfied includes verifying, based on the preset separation distance criterion, whether the separation distance (5) between the chip components (10) that are placed to alternate with each other satisfies the preset separation distance criterion.

## Description

### BACKGROUND

### 1. Field

One or more embodiments relate to a method and apparatus for verifying the placement of a chip component on a printed circuit board.

### 2. Description of the Related Art

Conformal coating may be applied to a printed circuit board (PCB) to protect the PCB from moisture, dust, corrosion, and whiskers that could adversely affect the operation of the PCB according to the product characteristics and the use environment. However, a void formed during a conformal coating process might contract or expand due to a change in the operating temperature according to the use environment. The creation of a void could cause oxidation or delamination inside the coating, which could result in circuit malfunctions. A small PCB including a large number of components, such as a high-density integrated circuit, needs to be designed with small spacings between components. A design with small spacings could result many bridge bubbles between the components. Because it is undesirable to design a board with only large spacing between components in order to prevent the occurrence of bridge bubbles, an appropriate criterion for a separation distance between components according to the size thereof is required. At the design stage, verification with the naked eye of a separation distance that may minimize bridge bubbles is time consuming and may lead to errors, resulting in loss of time and cost for redesign and remanufacture.

### SUMMARY

According to one or more embodiments, a method of verifying component placement on a printed circuit board (PCB) includes obtaining a preset separation distance criterion for chip components designed to be mounted on the PCB, and based on the preset separation distance criterion for an arrangement of the chip components, checking whether a separation distance between the chip components satisfies the preset separation distance criterion, wherein the checking of whether the preset separation distance criterion is satisfied includes verifying, based on the preset separation distance criterion, whether the separation distance between the chip components that are placed to alternate with each other satisfies the preset separation distance criterion.

According to one or more embodiments, the obtaining of the preset separation distance criterion may comprise: obtaining a separation distance criterion for a type of the chip components.

According to one or more embodiments, the obtaining of the preset separation distance criterion may comprise: obtaining a separation distance criterion for the arrangement of the chip components.

According to one or more embodiments, the checking of whether the preset separation distance criterion is satisfied may comprise: checking whether the arrangement of the chip components is an alternate arrangement in which the chip components are alternately arranged.

According to one or more embodiments, the checking of whether the preset separation distance criterion is satisfied may comprise: based on the arrangement of the chip components corresponding to the alternate arrangement, checking, based on a separation distance criterion for the alternate arrangement, whether a vertical separation distance between major axes of the chip components satisfies the preset separation distance criterion.

According to one or more embodiments, the separation distance criterion for the alternate arrangement may be less than separation distance criteria for chip component arrangements other than the alternate arrangement.

According to one or more embodiments, the checking of whether the arrangement of the chip components is the alternate arrangement may comprise: checking whether an overlap length of the major axes of the chip components corresponds to a preset proportion of a length of the major axis of the chip component.

According to one or more embodiments, provided is a computer program stored in a recording medium for executing the above-described method by using a computer.

According to one or more embodiments, an apparatus for verifying component placement on a PCB includes a processor configured to obtain a preset separation distance criterion for chip components designed to be mounted on the PCB, check, based on the preset separation distance criterion for an arrangement of the chip components, whether a separation distance between the chip components satisfies the preset separation distance criterion, and verify, based on the preset separation distance criterion, whether the separation distance between the chip components that are placed to alternate with each other satisfies the preset separation distance criterion.

According to one or more embodiments, the processor may be further configured to obtain a separation distance criterion for a type of the chip components.

According to one or more embodiments, the processor may be further configured to obtain a separation distance criterion for the arrangement of the chip components.

According to one or more embodiments, the processor may be further configured to check whether the arrangement of the chip components is an alternate arrangement in which the chip components are alternately arranged.

According to one or more embodiments, the processor may be further configured, based on the arrangement of the chip components corresponding to the alternate arrangement, to check, based on a separation distance criterion for the alternate arrangement, whether a vertical separation distance between major axes of the chip components satisfies the separation distance criterion.

According to one or more embodiments, the separation distance criterion for the alternate arrangement may be less than separation distance criteria for chip component arrangements other than the alternate arrangement.

According to one or more embodiments, the processor may be further configured to check whether an overlap length of the major axes of the chip components corresponds to a preset proportion of a length of the major axis of the chip component.

Other aspects, features, and advantages than those described above will become clear from the following detailed description, claims, and drawings for carrying out the disclosure.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

Features will become apparent to those of skill in the art by describing in detail exemplary embodiments with reference to the attached drawings in which:
FIG. 1 is a diagram for describing a configuration and an operation of a component placement verification apparatus according to an embodiment;
FIG. 2 is a diagram for describing a void formed according to component placement on a circuit board;
FIG. 3 is a flow chart of a component placement verification method according to an embodiment;
FIGS. 4 and 5 are diagrams for describing component arrangements and separation distances between components, according to an embodiment;
FIGS. 6 to 10 are diagrams for describing a separation distance verification method according to a component arrangement, according to an embodiment;
FIG. 11 is a diagram for describing separation distance criteria for types of components, according to an embodiment; and
FIG. 12 is a diagram for describing component arrangements according to an embodiment.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items.

As the disclosure allows for various changes and numerous embodiments, particular embodiments will be illustrated in the drawings and described in detail. The effects and features of the disclosure and methods of achieving them will become clear with reference to the embodiments described in detail below with the drawings. However, the disclosure is not limited to the embodiments disclosed below, and may be implemented in various forms.

Hereinafter, embodiments will be described in detail with reference to the accompanying drawings, and the same or corresponding components will be denoted by the same reference numerals when described with reference to the accompanying drawings, and thus, their descriptions that are already provided will be omitted.

In the following embodiments, terms such as "first," "second," etc., are used only to distinguish one component from another, and such components must not be limited by these terms. In addition, a singular expression also includes the plural meaning as long as it is not inconsistent with the context. In addition, the terms "comprises," "includes," "has", and the like used herein specify the presence of stated features or components, but do not preclude the presence or addition of one or more other features or components.

For convenience of description, the magnitude of components in the drawings may be exaggerated or reduced. For example, each component in the drawings is illustrated to have an arbitrary size and thickness for ease of description, and thus the disclosure is not limited to the drawings.

In the following embodiments, when a region, component, unit, block, or module is referred to as being "on" another part, it may be directly or indirectly on the other part, that is, another intervening region, component, unit, block, or module may be present therebetween. In addition, when a region, component, unit, block, or module is referred to as being connected to another region, component, unit, block, or module, they may be directly connected to each other, or may be indirectly connected to each other with still another region, component, unit, block, or module therebetween.

Hereinafter, various embodiments will be described in detail with reference to the accompanying drawings such that those of skill in the art may easily practice the disclosure.

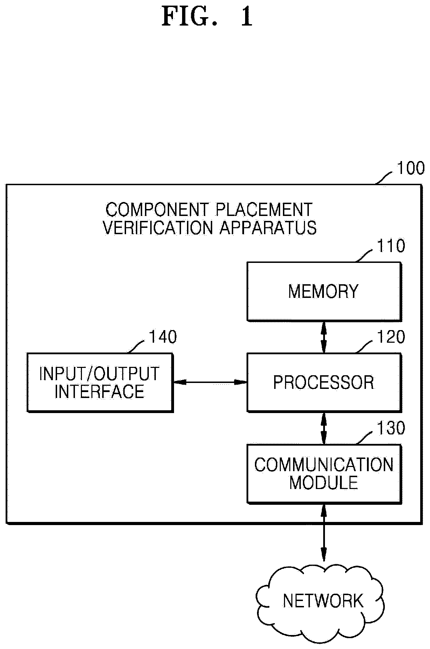

FIG. 1 is a diagram for describing a configuration and an operation of a component placement verification apparatus according to an embodiment.

Referring to FIG. 1, a component placement verification apparatus 100 according to an embodiment may include a memory 110, a processor 120, a communication module 130, and an input/output interface 140. In some implementations, the component placement verification apparatus 100 may further include other components or may omit some components. Some components of the component placement verification apparatus 100 may be separated into a plurality of devices, or a plurality of components may be integrated into one device.

The memory 110 is a computer-readable recording medium and may include a permanent mass storage device such as random-access memory (RAM), read-only memory (ROM), or a disk drive. In addition, program code and data for controlling the component placement verification apparatus 100 may be temporarily or permanently stored in the memory 110.

The processor 120 controls the overall operation of the component placement verification apparatus 100. For example, the processor 120 may be implemented in a form that selectively includes a processor known in the art, an application-specific integrated circuit (ASIC), other chipsets, a logic circuit, a register, a communication modem, and/or a data processing device, in order to perform the above-described operation. For example, the processor 120 may perform basic arithmetic, logic, and input/output operations, and may execute, for example, program code stored in the memory 110. The processor 120 may store data in the memory 110 or load data stored in the memory 110.

The processor 120 may be provided in a device for verifying component placement on a printed circuit board (PCB), to obtain a preset separation distance criterion for chip components designed to be mounted on a PCB. In addition, based on the separation distance criterion for the arrangement of the chip components, the processor 120 may check whether a separation distance between chip components satisfies the separation distance criterion. In addition, based on the separation distance criterion, the processor 120 may verify whether a separation distance between chip components placed to alternate with each other satisfies the separation distance criterion.

The communication module 130 may provide a function for communicating with an external device through a network. For example, a request generated by the processor 120 of the component placement verification apparatus 100 according to program code stored in a recording device, such as the memory 110, may be transmitted to the external device through the network under control by the communication module 130. Conversely, a control signal, a command, a file, and the like provided under control by a processor of the external device may be received by the component placement verification apparatus 100 through the communication module 130 via the network. For example, a control signal or a command received from the external device through the communication module 130 may be delivered to the processor 120 or the memory 110.

The communication method is not limited and may include short-range wireless communication between devices, as well as a communication method utilizing a communication network that the network may include (e.g., a mobile communication network, wired Internet, wireless Internet, or a broadcasting network). For example, the network may include any one or more of a personal area network (PAN), a local area network (LAN), a campus area network (CAN), a metropolitan area network (MAN), a wide area network (WAN), a broadband network (BBN), an Internet network, and the like. In addition, the network may include, but is not limited to, any one or more of network topologies including a bus network, a star network, a ring network, a mesh network, a star-bus network, a tree or hierarchical network, and the like.

In addition, the communication module 130 may communicate with an external device through a network. The communication method is not limited, but the network may be a short-range wireless communication network. For example, the network may be a Bluetooth, Bluetooth Low Energy (BLE), or Wi-Fi communication network.

In addition, the component placement verification apparatus 100 according to the disclosure may include the input/output interface 140. The input/output interface 140 may be a unit for interfacing with an input device and an output device. For example, the input device may include a device such as a keyboard or mouse, and the output device may include a device such as a display for displaying a communication session of an application. As another example, the input/output interface 140 may be a unit for interfacing with a device in which functions for input and output are integrated, such as a touch screen. As a more specific example, when the processor 120 of the component placement verification apparatus 100 processes a command of a computer program loaded into the memory 110, a service screen or content configured by using data provided by an external server may be displayed on a display through the input/output interface 140.

In addition, in some embodiments, the component placement verification apparatus 100 may include more components than those illustrated in FIG. 1. For example, the component placement verification apparatus 100 may be implemented to include at least some of the above-described input/output devices, or may further include other components such as a battery that supplies power to internal components, a charging device, various sensors, a database, and the like.

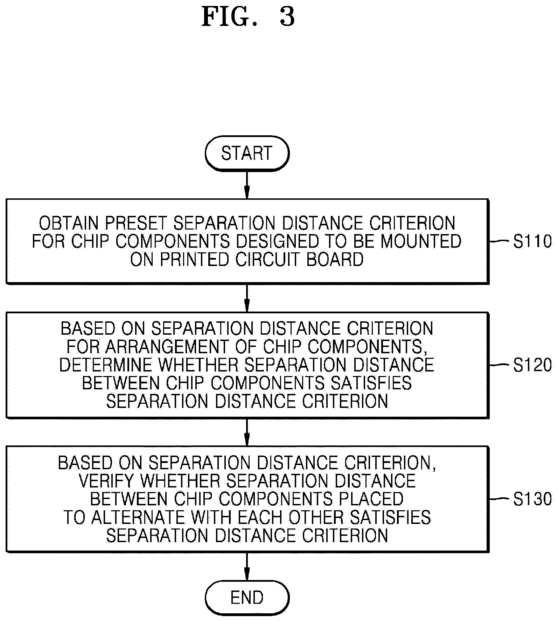

The processor 120 and the components of the processor 120 may control the component placement verification apparatus 100 to perform operations S110 to S 130 included in a component placement verification method of FIG. 3. For example, the processor 120 and the components of the processor 120 may be implemented to execute instructions according to code of an operating system and code of at least one program included in the memory 110. Here, the components of the processor 120 may represent different functions performed by the processor 120 according to instructions provided by program code stored in the component placement verification apparatus 100. An internal configuration and detailed operations of the processor 120 will be described below with reference to a flow chart of the component placement verification method of FIG. 3.

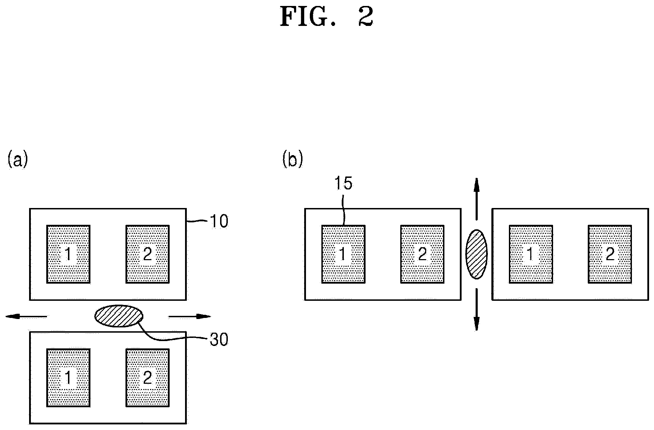

FIG. 2 is a diagram for describing a void formed according to component placement on a circuit board.

FIG. 2 illustrates voids that could be formed during conformal coating in a design stage of a PCB. For example, as illustrated in (a) and (b) of FIG. 2, a chip component 10 may include a tab 15 on which components are mounted. In (a) of FIG. 2, the chip components 10 may be placed such that the major axes of the chip components 10 face each other. In this case, a void 30 could be formed between the chip components 10. In addition, in (b) of FIG. 2, the chip components 10 may be placed such that the minor axes of the chip components 10 face each other. In this case, the void 30 could be formed between the chip components 10. In particular, the void 30 formed between the major axes of the chip component 10 may not be able to escape and thus may remain, thereby adversely affecting the operation of the circuit board.

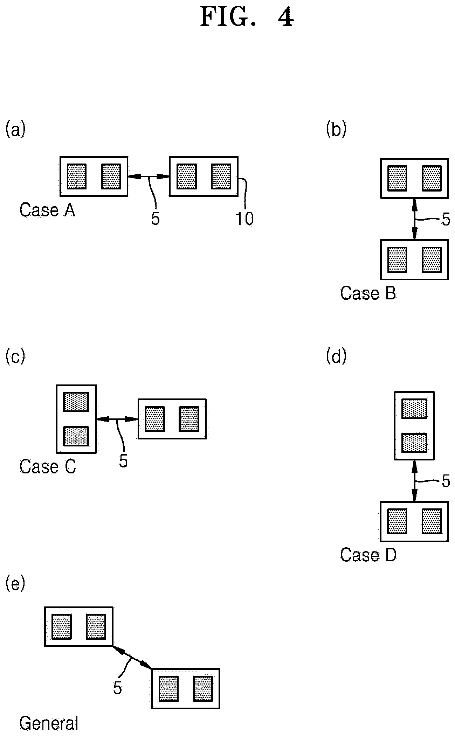

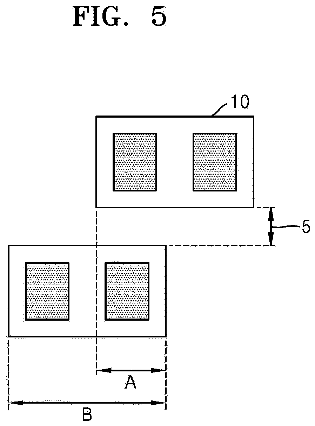

FIG. 3 is a flow chart of a component placement verification method according to an embodiment. In addition, FIGS. 4 and 5 are diagrams for describing component arrangements and separation distances between components, according to an embodiment.

Referring first to FIG. 3, in operation S110, a processor may obtain a preset separation distance criterion for chip components designed to be mounted on a PCB.

The processor according to an embodiment may obtain a separation distance criterion for the type of the chip components. In addition, the processor may obtain a separation distance criterion for the arrangement of the chip components. For example, as illustrated in FIG. 4, arrangements of chip components according to embodiments may include Case A (a), Case B (b), Case C (c), Case D (d), General (e). For example, in Case A (a), the chip components 10 may be placed such that the minor axes of the chip components 10 face each other, and the distance between the minor axes of the chip components 10 may be a separation distance 5. In Case B (b), the chip components 10 may be placed such that the major axes of the chip component 10 face each other, and the distance between the major axes of the chip component 10 may be the separation distance 5. In Case C (c) and Case D (d), the chip components 10 may be placed such that the major axis and the minor axis of the chip components 10 face each other, and the distance between the major axis and the minor axis of the chip components 10 may be the separation distance 5. In addition, in General (e), the chip components 10 may be diagonally placed with respect to each other, and the diagonal distance between the chip components 10 may be the separation distance 5.

In operation S120, based on the separation distance criterion for the arrangement of the chip components, the processor may determine whether the separation distance between the chip components satisfies the separation distance criterion.

The processor according to an embodiment may check whether the arrangement of the chip components is an alternate arrangement in which chip components are alternately placed. For example, as illustrated in FIGS. 4 and 5, the arrangement of Case B (b) in which the major axes of the chip components 10 face each other may be an alternate arrangement.

In addition, when the arrangement of the chip components corresponds to an alternate arrangement, the processor may check, based on a separation distance criterion for the alternate arrangement, whether the vertical distance between the major axes between the chip components satisfies the separation distance criterion. For example, as illustrated in FIG. 5, the vertical distance between the major axes of the chip components may be the separation distance 5.

In operation S130, based on the separation distance criterion, the processor may verify whether the separation distance between the chip components placed to alternate with each other satisfies the separation distance criterion.

The separation distance criterion for the alternate arrangement according to an embodiment may be less than separation distance criteria for chip component arrangements other than the alternate arrangement.

The processor according to an embodiment may check whether the overlap length between the major axes of the chip components corresponds to a preset proportion of the length of the major axis of the chip component. For example, in an alternate arrangement of chip components as illustrated in FIG. 5, the processor may check whether an overlap length A between the major axes of the chip components corresponds to a preset proportion of a length B of the major axis of the chip component.

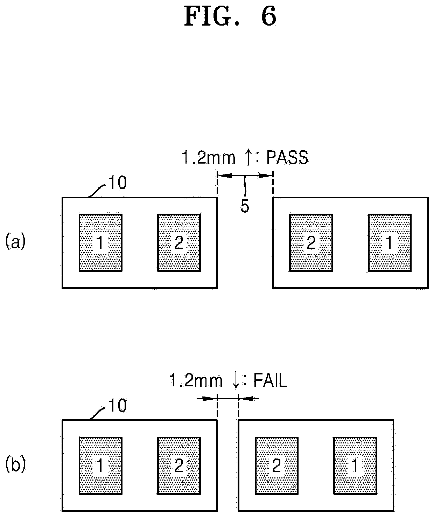

FIGS. 6 to 10 are diagrams for describing a separation distance verification method according to a component arrangement, according to an embodiment.

Based on a separation distance criterion for the arrangement of chip components, the processor according to an embodiment may determine whether the separation distance between the chip components satisfies the separation distance criterion. For example, as illustrated in FIGS. 4 and 6, in Case A (a), a separation distance criterion for the chip components may be 1.2 mm. In (a) of FIG. 6, the separation distance 5 is greater than the separation distance criterion of 1.2 mm and thus satisfies the separation distance criterion. In (b) of FIG. 6, the separation distance 5 is not greater than the separation distance criterion of 1.2 mm and thus does not satisfy the separation distance criterion.

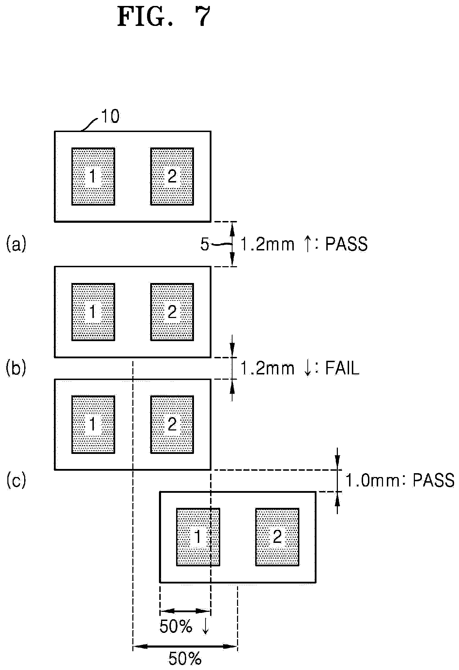

For example, as illustrated in FIGS. 4 and 7, in Case B (b), a separation distance criterion for the chip components may be 1.2 mm. In (a) of FIG. 7, the separation distance 5 is greater than the separation distance criterion of 1.2 mm and thus satisfies the separation distance criterion. In (b) of FIG. 7, the separation distance 5 is not greater than the separation distance criterion of 1.2 mm and thus does not satisfy the separation distance criterion. In (c) of FIG. 7, the separation distance 5 is not greater than the separation distance criterion of 1.2 mm, but corresponds to an alternate arrangement, and thus, a separation distance criterion for the alternate arrangement may be applied. For example, the separation distance criterion for the alternate arrangement may be 1.0 mm. In this case, the separation distance 5 may be greater than 1.0 mm, which is the separation distance criterion for the alternate arrangement, and thus may satisfy the separation distance criterion. For example, as illustrated in (c) of FIG. 7, when the overlap length A between the major axes of the chip components is less than 50 % of the length B of the major axis of the chip component, the arrangement of the chip components may correspond to the alternate arrangement.

The separation distance criterion for the alternate arrangement according to an embodiment may be set to be less than separation distance criteria for arrangements other than the alternate arrangement. In this case, the components may be alternately placed such that the separation distance therebetween is less than a basic separation distance. According to the disclosure, such placement may be automatically verified. In order to minimize coating bubbles, it is recommended to set a high separation distance between components, but in order to mount more components on a board with a limited size, a separation distance that may minimize defects may be set and verified for a component arrangement through an experiment.

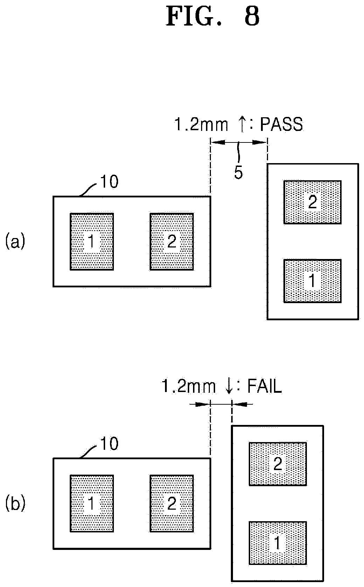

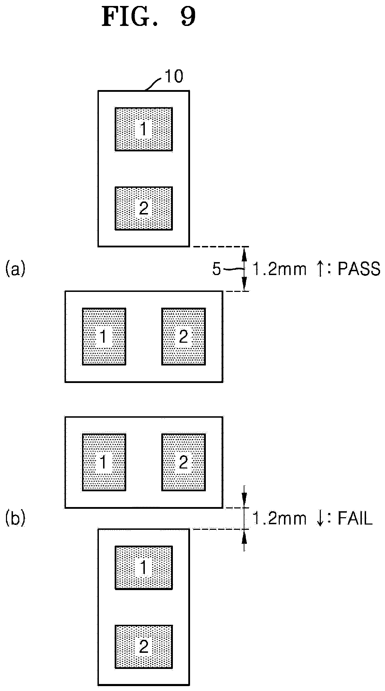

For example, as illustrated in FIGS. 4, 8, and 9, in Case C (c) and Case D (d), the separation distance criterion between the chip components may be 1.2 mm. In (a) of FIG. 8 and (a) of FIG. 9, the separation distance 5 is greater than the separation distance criterion of 1.2 mm and thus satisfies the separation distance criterion. In (b) of FIG. 8 and (b) of FIG. 9, the separation distance 5 is not greater than the separation distance criterion of 1.2 mm and thus does not satisfy the separation distance criterion.

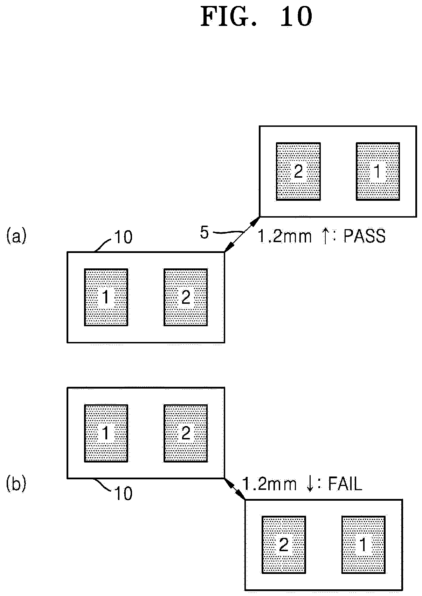

For example, as illustrated in FIGS. 4 and 10, in General (e), the separation distance criterion for the chip components may be 1.2 mm. In (a) of FIG. 10, the separation distance 5 is greater than the separation distance criterion of 1.2 mm and thus satisfies the separation distance criterion. In (b) of FIG. 10, the separation distance 5 is not greater than the separation distance criterion of 1.2 mm and thus does not satisfy the separation distance criterion.

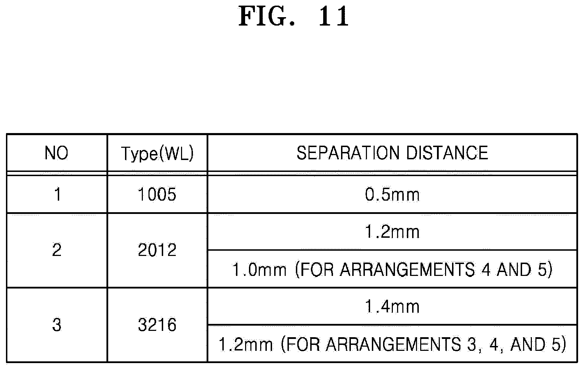

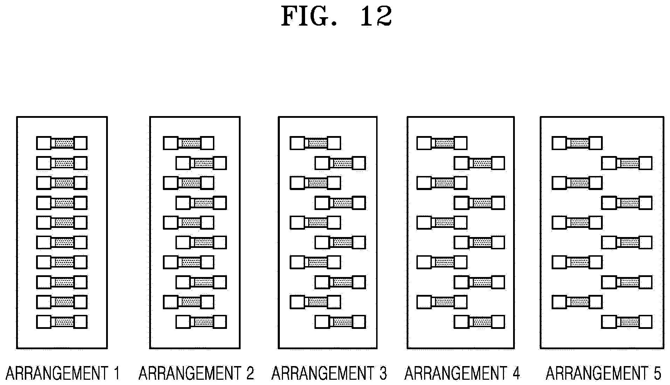

FIG. 11 is a diagram for describing separation distance criteria for types of components, according to an embodiment. In addition, FIG. 12 is a diagram for describing component arrangements according to an embodiment.

Referring to FIGS. 11 and 12 together, a separation distance criterion may be set according to a type of chip component. For example, as illustrated in FIG. 11, a separation distance may be set for each type according to a size of chip component. In addition, a separation distance criterion for an alternate arrangement may be set according to a type of chip component. For example, for a chip component '2012', a basic separation distance criterion may be set to 1.2 mm, and a separation distance criterion for an alternate arrangement may be set to 1.0 mm.

Referring to FIGS 4. and 12 together, for the arrangement of Case B (b) in which the major axes of the chip components 10 face each other, Arrangements 1 to 5 may be set according to the ratio of the overlap length A of the major axes of the chip components to the length B of the major axis of the chip component. Thus, a separation distance criterion for an alternate arrangement may be applied.

According to the disclosure, it may be possible to diagnose a quality issue in advance by automating verification whether the design satisfies a component placement criterion for minimizing bridge bubbles formed according to component placement on a circuit board.

According to the disclosure, by establishing a placement criterion for each size of chip component to minimize voids that may occur during conformal coating in a PCB design stage, and securing design quality through automatic verification with the placement criterion in a preliminary verification stage (design for manufacturability (DFM)), time and cost for redesign and remanufacture may be reduced.

The apparatus and/or system described above may be implemented as a hardware component, a software component, and/or a combination of a hardware component and a software component. The apparatus and components described in the embodiments may be implemented by using one or more general-purpose computers or special-purpose computers, such as a processor, a controller, an arithmetic logic unit (ALU), a digital signal processor, a microcomputer, a field-programmable gate array (FPGA), a programmable logic unit (PLU), a microprocessor, or any other device configured to execute and respond to instructions. The processor may execute an operating system (OS) and one or more software applications running on the OS. The processor may also access, store, modify, process, and generate data in response to execution of software. Although some embodiments are described, for convenience of understanding, with reference to examples in which a single processor is used, those of skill in the art would understand that a processor may include a plurality of processing elements and/or a plurality of types of processing elements. For example, the processor may include one or more processors and one controller. In addition, other processing configurations are also possible, such as a parallel processor.

The software may include a computer program, code, instructions, or a combination of one or more thereof, and may configure the processor to operate as desired or may independently or collectively instruct the processor. Software and/or data may be embodied permanently or temporarily in any type of machine, component, physical or virtual equipment, computer storage medium or device, or in a propagated signal wave capable of providing instructions or data to or being interpreted by the processor. The software may be distributed on networked computer systems and stored or executed in a distributed manner. The software and data may be stored in one or more computer-readable recording media.

The method according to an embodiment may be embodied as program commands executable by various computer devices, and recorded on a computer-readable medium. The computer-readable medium may include program instructions, data files, data structures, or the like separately or in combinations. The program commands to be recorded on the medium may be specially designed and configured for an embodiment, or may be well-known to and be usable by those skilled in the art of computer software. Examples of the computer-readable recording medium include magnetic media such as hard disks, floppy disks, or magnetic tapes, optical media such as a compact disc read-only memory (CD-ROM) or a digital video disc (DVD), magneto-optical media such as a floptical disk, and hardware devices such as ROM, random-access memory (RAM), or flash memory, which are specially configured to store and execute program instructions. Examples of the program instructions include not only machine code, such as code made by a compiler, but also high-level language code that is executable by a computer by using an interpreter or the like. The hardware device may be configured to operate as one or more software modules to perform an operation of an embodiment, and vice versa.

Although the embodiments have been described with the limited embodiments and the drawings, various modifications and changes may be made by those of skill in the art from the above description. For example, the described techniques may be performed in a different order from the described method, and/or components of the described system, structure, device, circuit, etc. may be combined or integrated in a different form from the described method, or may be replaced or substituted by other components or equivalents to achieve appropriate results.

Therefore, other implementations or embodiments, and equivalents of the appended claims are within the scope of the claims.

According to an embodiment as described above, it is possible to implement a method and apparatus for verifying chip component placement on a PCB. However, the scope of the disclosure is not limited.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the disclosure as defined by the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the appended claims.

## Claims

1. A method of verifying component placement on a printed circuit board, PCB, the method comprising:
obtaining a preset separation distance criterion for an arrangement of chip components (10) designed to be mounted on the PCB; and
based on the preset separation distance criterion for the arrangement of the chip components (10), checking whether a separation distance (5) between the chip components (10) satisfies the preset separation distance criterion,
wherein the checking of whether the preset separation distance criterion is satisfied comprises verifying, based on the preset separation distance criterion, whether the separation distance (5) between the chip components (10) that are placed to alternate with each other satisfies the preset separation distance criterion.

2. The method as claimed in claim 1, wherein the obtaining of the preset separation distance criterion comprises:
obtaining a separation distance criterion for a type of the chip components (10).

3. The method as claimed in claim 1 or 2, wherein the obtaining of the preset separation distance criterion comprises:
obtaining a separation distance criterion for the arrangement of the chip components (10).

4. The method as claimed in any one of the preceding claims, wherein the checking of whether the preset separation distance criterion is satisfied comprises:
checking whether the arrangement of the chip components (10) is an alternate arrangement in which the chip components (10) are alternately arranged.

5. The method as claimed in claim 4, wherein the checking of whether the preset separation distance criterion is satisfied comprises:
based on the arrangement of the chip components (10) corresponding to the alternate arrangement, checking, based on a separation distance criterion for the alternate arrangement, whether a vertical separation distance (5) between major axes of the chip components (10) satisfies the preset separation distance criterion.

6. The method as claimed in claim 4 or 5, wherein the separation distance criterion for the alternate arrangement is less than separation distance criteria for chip component (10) arrangements other than the alternate arrangement.

7. The method as claimed in any one of claims 4 to 6, wherein the checking of whether the arrangement of the chip components (10) is the alternate arrangement comprises checking whether an overlap length of the major axes of the chip components (10) corresponds to a preset proportion of a length of the major axis of the chip component (10).

8. A computer program stored in a recording medium for executing the method as claimed in any one of the preceding claims by using a computing device.

9. An apparatus for verifying component placement on a printed circuit board, PCB, the apparatus comprising a processor (120) configured to obtain a preset separation distance criterion for an arrangement of chip components (10) designed to be mounted on the PCB, check, based on the preset separation distance criterion for the arrangement of the chip components (10), whether a separation distance (5) between the chip components (10) satisfies the preset separation distance criterion, and verify, based on the preset separation distance criterion, whether the separation distance (5) between the chip components (10) that are placed to alternate with each other satisfies the preset separation distance criterion.

10. The apparatus as claimed in claim 9, wherein the processor (120) is further configured to obtain a separation distance criterion for a type of the chip components (10).

11. The apparatus as claimed in claim 9 or 10, wherein the processor (120) is further configured to obtain a separation distance criterion for the arrangement of the chip components (10).

12. The apparatus as claimed in any one of claims 9 to 11, wherein the processor (120) is further configured to check whether the arrangement of the chip components (10) is an alternate arrangement in which the chip components (10) are alternately arranged.

13. The apparatus as claimed in claim 12, wherein the processor (120) is further configured, based on the arrangement of the chip components (10) corresponding to the alternate arrangement, to check, based on a separation distance criterion for the alternate arrangement, whether a vertical separation distance (5) between major axes of the chip components (10) satisfies the separation distance criterion.

14. The apparatus as claimed in claim 12 or 13, wherein the separation distance criterion for the alternate arrangement is less than separation distance criteria for chip component (10) arrangements other than the alternate arrangement.

15. The apparatus as claimed in any one of claims 12 to 14, wherein the processor (120) is further configured to check whether an overlap length of the major axes of the chip components (10) corresponds to a preset proportion of a length of the major axis of the chip component (10).
